# EUROPÄISCHE PATENTSCHRIFT

(11) **EP 3 491 266 B1**
(45) Veröffentlichungstag und Bekanntmachung des Hinweises auf die Patenterteilung: **20.03.2024**
(21) Anmeldenummer: 17751278.7
(22) Anmeldetag: 21.07.2017
(51) Int. Cl.: F16F 15/14, F16F 15/167

(54) **DREHSCHWINGUNGSDÄMPFER**
TORSIONAL VIBRATION DAMPER
AMORTISSEUR DE VIBRATIONS DE TORSION

(30) Priorität: 26.07.2016 DE 102016113719
(43) Veröffentlichungstag der Anmeldung: 05.06.2019
(73) Patentinhaber: Hasse & Wrede GmbH, 12681 Berlin (DE)
(72) Erfinder: STEIDL, Michael, 10318 Berlin (DE); KNOPF, Florian, 14199 Berlin (DE)
(74) Vertreter: Specht, Peter
(86) Internationale Anmeldenummer: PCT/EP2017/068530
(87) Internationale Veröffentlichungsnummer: WO 2018/019729

(56) Entgegenhaltungen:
- EP-A2- 2 607 744
- DE-A1- 2 353 891
- DE-A1- 4 110 845
- DE-A1- 19 643 687
- DE-B3-102006 016 202
- US-A- 5 140 868

## Beschreibung

Die vorliegende Erfindung betrifft einen Drehschwingungsdämpfer mit einem auf einer Antriebswelle eines Motors befestigbaren Nabenteil (Primärmasse) und einem das Nabenteil im radial äußeren Bereich umfassenden Schwungring (Sekundärmasse), wobei zwischen Naben teil und Schwungring ein mit einem Fluid gefüllter Spalt und eine Dichtungseinrichtung vorgesehen sind, mittels derer das Austreten des Fluids vermieden werden soll, nach dem Oberbegriff des Anspruchs 1.

Ein Drehschwingungsdämpfer der gattungsgemäßen Art ist beispielsweise aus der DE 23 53 891 A1 bekannt. Zum Stand der Technik werden zudem die DE 41 10 845 und die US 5,140,868 sowie die GB 11 05 292 A genannt.

Man spricht allgemein auch von Drehschwingungsdämpfern mit nach außen versetztem Schwungring im Gegensatz zu ebenfalls bekannten Konstruktionen, bei dem der Schwungring komplett in einem separaten Gehäuse gekapselt gelagert ist.

Nachteil der letzteren Konstruktionen ist, dass die Masse des Gehäuses für die Funktion des Dämpfers irrelevant ist und durch die Kapselung des Schwungrings die Wärmeabfuhr limitiert ist.

Bei den bekannten Drehschwingungsdämpfern mit nach außen versetztem Schwungring muss sichergestellt werden, dass ein Austreten des zwischen Nabenteil und Schwungring befindlichen Fluids vermieden wird.

Bei dem Drehschwingungsdämpfer der gattungsgemäßen Art werden als Dichtungen gleitende Dichtringe verwendet, was mit dem Nachteil behaftet ist, das als Dämpfungsmedium ein Fluid, insbesondere ein Silikonöl, verwendet wird und dieses keine schmierenden Eigenschaften hat, so dass gleitende Dichtungen nur bedingt geeignet sind, das Problem der Abdichtung zu lösen, da sie innerhalb von kurzer Laufzeit hohen Verschleiß aufweisen. Weiterhin können gleitende Dichtungen keinen kompletten Schutz gegen das Eindringen von sehr kleinen Partikeln sowie z.B. von Wasser gewährleisten.

Der vorliegenden Erfindung liegt die Aufgabe zugrunde, einen Drehschwingungsdämpfer der gattungsgemäßen Art mit Dichtungseinrichtungen zu versehen, welche die vorgenannten Nachteile nicht aufweisen und eine lange Lebensdauer besitzen.

Diese Aufgabe wird durch den Gegenstand des Anspruchs 1 gelöst.

Durch eine derartige Konstruktion werden die Nachteile des Standes der Technik vermieden, da keinerlei Reibung zwischen Dichtungselementen und rotierenden Teilen des Drehschwingungsdämpfers auftreten können.

Die mit dem Nabenteil bzw. dem Schwungring dicht verbundenen ersten bzw. zweiten Ringe der Dichtungseinrichtungen sind bevorzugt aus Metall hergestellt.

Bevorzugt ist der jeweilige Ring aus Elastomer einer Dichtungseinrichtung mit den am Nabenteil bzw. am Schwungring befestigten Ringen aus Metall durch eine während eines Elastomervernetzungsvorganges hergestellte Gummi-Metallverbindung abdichtend verbunden.

Bevorzugt wird als Elastomer zwischen den jeweils ersten und zweiten Ringen einer Dichtungseinrichtung ein hochtemperaturbeständiges Elastomer, wie z.B. EPDM oder Silikonmaterial verwendet. "Silikonmaterial" bedeutet im Rahmen dieser Schrift ein Material, das ein synthetisches Polymere enthält oder ist, bei dem Siliziumatome über Sauerstoffatome verknüpft sind.

Dies ist besonders zweckmäßig deshalb, weil die genannten Materialien auch im hohen Temperaturbereich geeignet sind.

Bei den jeweiligen Dichtungseinrichtungen handelt es sich konstruktionsgemäß nicht um Gleitdichtungen, so dass eine sichere und dauerhafte komplette Abdichtung erreicht wird.

Die Dichtungseinrichtungen müssen nicht eingepresst werden, wodurch sich der Vorteil ergibt, dass die Dichtungseinrichtungen spannungsfrei verbaut werden können. So kann ein definierter Zustand des Spalts im Drehschwingungsdämpfer garantiert werden, insbesondere wenn der Schwungring gegenüber dem Nabenteil auf Gleitlagern gelagert ist.

Es ist erfindungsgemäß vorgesehen, dass der wenigstens eine aus dem Elastomer, bevorzugt aus Silikonmaterial, hergestellte Ring mit axial und sich radial erstreckenden flächigen Bereichen der Ringe abdichtend verbunden ist. "Schräg" bedeutet winklig zur Axialrichtung und zur Radialrichtung.

Es ist insbesondere vorteilhaft, dass der wenigstens eine aus Elastomer, bevorzugt aus Silikonmaterial, hergestellte Ring mit unterschiedlich ausgerichteten, sich axial und sich radial erstreckenden flächigen Bereichen der beiden Ringe aus Metall abdichtend verbunden ist. Denn eine solche abdichtende Verbindung in zwei Richtungen an der Primärmasse und/oder an der Sekundärmasse bildet jeweils eine besonders sichere und langlebige Verbindung aus. Hierdurch kann jeweils auch ein besonders gut definierter Zustand des Spalts im Dauereinsatz garantiert werden.

Weitere Merkmale und Vorteile der Erfindung ergeben sich aus weiteren Unteransprüchen und der nachfolgenden Beschreibung zweier Ausführungsbeispiele der Erfindung. Es zeigen:
- **Fig. 1**: eine perspektivische Darstellung eines Drehschwingungsdämpfers;
- **Fig. 2**: einen Teilschnitt nach der Linie II-II in **Fig. 1**; und
- **Fig. 3**: einen der **Fig. 2** entsprechenden Teilschnitt durch einen Drehschwingungsdämpfer nach einem weiteren Ausführungsbeispiel.

Die in den Figuren dargestellten Ausführungsbeispiele fallen nicht unter Anspruch 1.

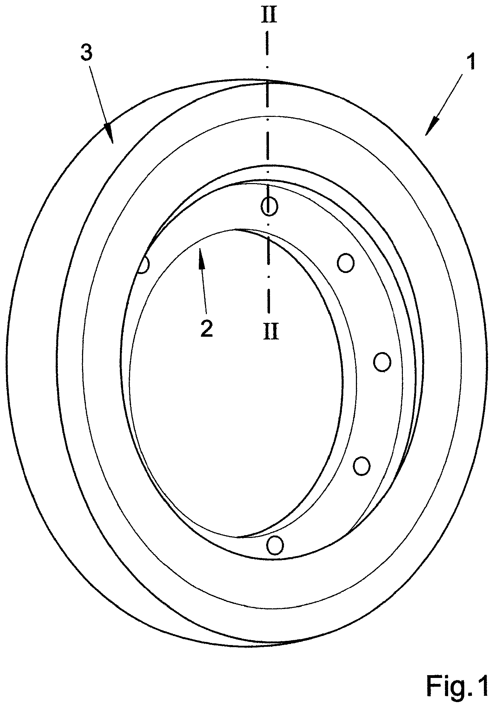

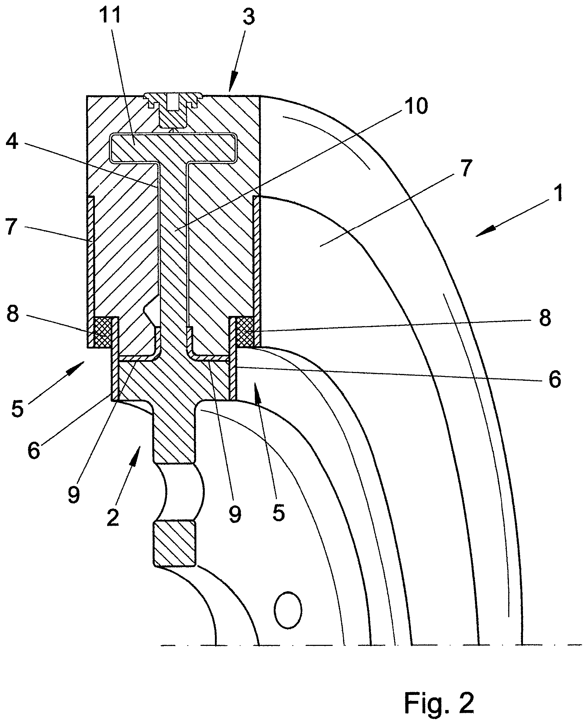

Der in den **Fig. 1** **und** **2** dargestellte und insgesamt mit dem Bezugszeichen 1 bezeichnete Drehschwingungsdämpfer weist ein auf einer Antriebswelle eines Motors befestigbares Nabenteil 2 auf, welches auch als Primärmasse bezeichnet werden kann und einen das Nabenteil 2 im radial äußeren Bereich umfassenden Schwungring 3, der auch als Sekundärmasse bezeichnet wird.

Zwischen dem Nabenteil 2 und dem Schwungring 3 ist ein Spalt 4 vorgesehen, welcher mit einem Fluid, vorzugsweise einem Silikonöl, gefüllt ist. Nach außen ist der Bereich des Spaltes 4 durch Dichtungseinrichtungen 5 abgedichtet, die im Folgenden näher beschrieben werden.

Jede Dichtungseinrichtung 5 besteht jeweils aus einem ersten, mit dem Nabenteil 2 dicht verbundenen Ring 6 sowie einem mit dem Schwungring 3 ebenfalls dicht verbundenen zweiten Ring 7 sowie einem Ring 8 aus einem Elastomer, welcher einerseits abdichtend mit dem ersten und andererseits abdichtend mit dem zweiten Ring 6, 7 verbunden ist.

Die jeweils ersten und zweiten Ringe 6, 7 der jeweiligen Dichtungseinrichtung 5 bestehen vorzugsweise aus Metall und sind mit dem Nabenteil 2 bzw. dem Schwungring 3 durch ein geeignetes Verbindungsverfahren, insbesondere Schrauben, Schweißen, Kleben, Löten oder dergleichen fest verbunden und somit auch im Sinne dieser Schrift dicht verbunden, insbesondere umlaufend dicht verbunden.

Der jeweilige, aus Elastomer, vorzugsweise aus hochtemperaturfähigem Elastomer, z.B. Silikonmaterial, hergestellte Ring 8 ist mit den beiden ersten und zweiten Ringen 6, 7 nach Art eines Verbundteils abdichtend verbunden, insbesondere umlaufend abdichtend verbunden. Bevorzugt ist der jeweilige Ring aus Elastomer der jeweiligen Dichtungseinrichtung mit den am Nabenteil bzw. am Schwungring befestigten Ringen aus Metall durch eine insbesondere während eines Elastomervernetzungsvorganges hergestellte Gummi-Metallverbindung abdichtend verbunden.

Hierdurch ergibt sich eine einwandfreie und dauerhafte Abdichtung des Spaltbereiches, wobei bei der Verwendung von hochtemperaturfähigen Elastomeren, z.B. Silikonmaterial für die jeweiligen Ringe 8 der Vorteil gegeben ist, dass diese auch im hohen Temperaturbereich geeignet sind.

Der Schwungring 3 ist vorteilhafterweise gegenüber dem Nabenteil 2 auf Gleitlagern 9 gelagert, und zwar sowohl radial wie auch axial, wodurch die Größe des Spaltes 4 genau definiert ist.

Es ist besonders vorteilhaft, wenn der aus einem Elastomer, bevorzugt aus Silikon, hergestellte Ring 8 an einander gegenüberliegenden axialen und/oder radialen Flächen der ersten und zweiten Ringe 6, 7 anvulkanisiert ist.

Beim Ausführungsbeispiel der Erfindung gemäß den **Fig. 1** **und** **2** ist der aus einem Elastomer, bevorzugt aus Silikon, hergestellte Ring 8 an einander gegenüberliegenden Flächen der sich hier in radialer Richtung einander überlappenden ersten und zweiten Ringe 6, 7 anvulkanisiert.

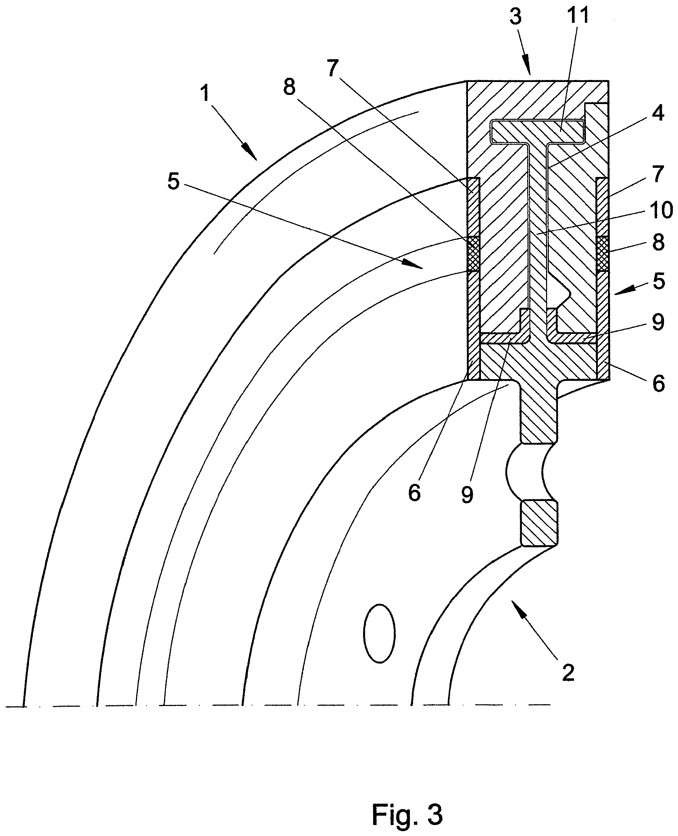

Beim Ausführungsbeispiel der Erfindung nach **Fig. 3** besteht der Unterschied zum Ausführungsbeispiel nach den **Fig. 1** **und** **2** darin, dass die ersten und zweiten Ringe 6, 7 der Dichtungseinrichtungen 5 in einer Ebene liegen und der Ring 8 an den einander gegenüberliegenden umlaufenden axialen Kanten dieser Ringe 6 und 7 anvulkanisiert ist.

Denkbar sind auch Konstruktionen, bei denen der aus Elastomer hergestellte Ring sowohl an vorzugsweise größerflächigen radialen Flächen wie auch an axialen Flächen, insbesondere Kantenbereichen, der Ringe 6 und 7 gleichzeitig befestigt ist bzw. anhaftet. Es ist insofern besonders vorteilhaft, wenn der aus einem Elastomer, bevorzugt aus Silikon, hergestellte Ring 8 an einander gegenüberliegenden axialen und radialen Flächen der ersten und zweiten Ringe 6, 7 anvulkanisiert ist. Realisierbar ist dies auf verschiedene Weise. Beispielsweise kann vorteilhaft vorgesehen sein, dass der Ring 6 in einer Konstruktion nach Art der Fig. 2 etwas weniger weit radial nach außen reicht und wenn das Elastomermaterial dann auch dessen radial äußere Axialseite erreicht und dort auch haftet und wenn das Elastomermaterial des Ringes 8 auch die untere Axialseite der Ringes 7 erreicht und dort haftet (hier nicht dargestellt). Dabei könnte der Ring 8 insgesamt auch schräg zur Radialen und zur Axialen Richtung verlaufen, beispielsweise dann, wenn der Ring 7 etwas weniger weit radial nach innen reichen würde oder wenn sich beiden Ringe 6, 7 gar nicht radial überlappen würden. Dennoch könnte durch schräg verlaufende Ringe 8, die an den Axialseiten und den Radialseiten der Ringe 6, 7 haften, dann wiederum eine vorteilhafte Ausgestaltung realisiert werden (hier jeweils nicht dargestellt).

Es sei noch erwähnt, dass der Schwungring 3 hier aus mindestens zwei Bauteilen besteht, um diesen Schwungring 3 auf dem Nabenteil 2 montieren zu können. Hierbei sind alle bisher bekannten Konstruktionsformen denkbar.

Das Nabenteil 2 ist in den dargestellten Ausführungsbeispielen mit einem radial nach außen vorstehenden Flansch 10 versehen, der im äußeren Randbereich abgeschlossen wird durch einen in Axialrichtung verlaufenden Steg 11, der sich, wie in den **Fig. 2** **und** **3** gezeigt, zu beiden Seiten des Flansches 10 hin erstrecken kann, wodurch sich eine T-Form ergibt, aber auch lediglich zu einer Seite des Flansches 10 hin gesehen verlaufen kann, so dass sich ein L-förmiger Querschnitt ergibt. Durch diese Geometrie ist der Schwungring 3 sowohl in Radialrichtung wie auch in Axialrichtung gegenüber dem Nabenteil 2 fixiert, wobei, wie schon erwähnt, durch die Gleitlager 9 die Größe des umlaufenden Spaltes 4 stets definiert ist. Diese Konstruktion ist besonders vorteilhaft, die Erfindung ist aber nicht auf sie beschränkt.

### Bezugszeichenliste

- 1: Drehschwingungsdämpfer
- 2: Nabenteil
- 3: Schwungring
- 4: Spalt
- 5: Dichtungseinrichtung
- 6: Ring
- 7: Ring
- 8: Ring
- 9: Gleitlager
- 10: Flansch
- 11: Steg

## Patentansprüche

1. Drehschwingungsdämpfer (1) mit einem auf einer Antriebswelle eines Motors befestigbaren Nabenteil (2) (Primärmasse) und einem das Nabenteil (2) im radial äußeren Bereich umfassenden Schwungring (3) (Sekundärmasse), wobei zwischen Nabenteil (2) und Schwungring (3) ein mit einem Fluid gefüllter Spalt (4) und eine Dichtungseinrichtung (5) vorgesehen sind, mittels derer das Austreten des Fluids vermieden werden soll, wobei zwei Dichtungseinrichtungen vorgesehen sind, wobei die Dichtungseinrichtungen (5) jeweils einen ersten, mit dem Nabenteil (2) dicht verbundenen Ring (6) sowie einen mit dem Schwungring (3) dicht verbundenen zweiten Ring (7) sowie einen Ring (8) aus einem Elastomer aufweisen, welcher einerseits abdichtend mit dem ersten Ring (6) und andererseits mit dem zweiten Ring (7) verbunden ist, wobei der jeweilige aus Elastomer hergestellte Ring (8) jeweils mit sich axial und sich radial erstreckenden flächigen Bereichen der ersten und zweiten Ringe (6, 7) abdichtend verbunden ist,
**dadurch gekennzeichnet, dass**
die Ringe (8) aus einem Elastomer, die jeweils mit sich axial und sich radial erstreckenden flächigen Bereichen der ersten und zweiten Ringe (6, 7) abdichtend verbunden sind, jeweils zu den ersten und zweiten Ringen (6, 7) schräg verlaufen.

2. Drehschwingungsdämpfer nach Anspruch 1, **dadurch gekennzeichnet, dass** die mit dem Nabenteil (2) bzw. dem Schwungring (3) verbundenen ersten bzw. zweiten Ringe (6, 7) der Dichtungseinrichtungen (5) aus Metall bestehen.

3. Drehschwingungsdämpfer nach Anspruch 1 oder 2, **dadurch gekennzeichnet, dass** der oder die aus Elastomer bestehenden Ringe (8) der Dichtungseinrichtung (5) mit den am Nabenteil (2) bzw. am Schwungring (3) befestigten Ringen (6, 7) aus Metall durch eine während eines Elastomervernetzungsvorganges hergestellte Gummi-Metallverbindung abdichtend verbunden ist.

4. Drehschwingungsdämpfer nach einem der vorhergehenden Ansprüche,
**dadurch gekennzeichnet, dass** der Ring (8) aus Elastomer zwischen den jeweils ersten und zweiten Ringen (6, 7) der wenigstens einen Dichtungseinrichtung (5) aus einem hochtemperaturfähigen Elastomer, z.B. einem Silikonmaterial besteht.

5. Drehschwingungsdämpfer nach einem der vorhergehenden Ansprüche, **dadurch gekennzeichnet, dass** der Schwungring (3) gegenüber dem Nabenteil (2) auf Gleitlagern (9) radial und/oder axial definiert gelagert ist.

## Claims

1. A torsional vibration damper (1) having a hub part (2) (primary mass) which may be attached a drive shaft of a motor, and an inertia ring (3) (secondary mass) which encloses the hub part (2) in the radially outer region, wherein a fluid-filled gap (4) and a sealing device (5) to prevent the escape of fluid are provided between the hub part (2) and the inertia ring (3),
whereby two sealing devices are provided, whereby the sealing devices (5) each have a first ring (6) tightly connected to the hub part (2) and a second ring (7) tightly connected to the inertia ring (3), and an elastomer ring (8) which is connected sealingly on one side to the first ring (6) and on the other side to the second ring (7), whereby the respective elastomer ring (8) is respective connected sealingly to axially and radially extending superficial regions of the first and second rings (6, 7),
**characterized in that**,
the elastomer rings (8), which are each sealingly connected to axially and radially extending flat regions of the first and second rings (6, 7), each extend at an angle to the first and second rings (6, 7).

2. The torsional vibration damper as claimed in claim 1, **characterized in that** the first and second rings (6, 7) of the sealing devices (5) connected to the hub part (2) and the inertia ring (3) respectively are made of metal.

3. The torsional vibration damper as claimed in claim 1 or 2, **characterized in that** the elastomer rings (8) of the sealing device (5) are connected sealingly, by means of a rubber-metal connection produced during an elastomer crosslinking process, to the metal rings (6, 7) which are attached respectively to the hub part (2) and to the inertia ring (3).

4. The torsional vibration damper as claimed in any of the preceding claims, **characterized in that** the elastomer ring (8) between the respective first and second rings (6, 7) of the at least one sealing device (5) is made of a high-temperature-resistant elastomer, e.g. a silicone material.

5. The torsional vibration damper as claimed in any of the preceding claims, **characterized in that** the inertia ring (3) is mounted with radial and/or axial definition relative to the hub part (2) on plain bearings (9).

## Revendications

1. Amortisseur de vibrations de torsion (1) avec une partie formant moyeu (2) pouvant être fixée sur l'arbre d'entrée d'un moteur (masse primaire) et un volant annulaire (3) qui entoure la partie formant moyeu (2) dans sa région extérieure dans le sens radial (masse secondaire), dans lequel sont prévus entre la partie formant moyeu (2) et le volant annulaire (3) un espace (4) rempli de fluide et un dispositif d'étanchéité (5) destiné à éviter l'échappement du fluide, dans lequel sont prévus deux dispositifs d'étanchéité, lesquels dispositifs d'étanchéité (5) comportent chacun une première bague (6) reliée de façon étanche à la partie formant moyeu (2) et une deuxième bague (7) reliée de façon étanche au volant annulaire (3), ainsi qu'un jonc (8) fait d'un élastomère qui est relié, d'une part, de façon étanche à la première bague (6) et, d'autre part, à la deuxième bague (7), chaque jonc (8) en élastomère étant relié de façon étanche à des zones plates de la première bague et de la deuxième (6, 7) qui s'étendent dans le sens axial et dans le sens radial, **caractérisé en ce que** les joncs (8) en élastomère reliés chacun de façon étanche à des zones plates de la première bague et de la deuxième (6, 7) qui s'étendent dans le sens axial et dans le sens radial s'étendent à l'oblique vers la première bague et la deuxième (6, 7).

2. Amortisseur de vibrations de torsion selon la revendication 1, **caractérisé en ce que** les première et deuxième bagues (6, 7) des dispositifs d'étanchéité (5) reliées à la partie formant moyeu (2) ou au volant annulaire (3) sont faites de métal.

3. Amortisseur de vibrations de torsion selon la revendication 1 ou 2, **caractérisé en ce que** le ou les joncs (8) en élastomère du dispositif d'étanchéité (5) sont reliés de façon étanche aux bagues (6, 7) en métal fixées à la partie formant moyeu (2) et au volant annulaire (3) par un assemblage métalcaoutchouc formé pendant un processus de polymérisation de l'élastomère.

4. Amortisseur de vibrations de torsion selon l'une des revendications précédentes, **caractérisé en ce que** le jonc (8) en élastomère entre la première bague et la deuxième (6, 7) de l'au moins un dispositif d'étanchéité (5) se compose d'un élastomère résistant à haute température, par exemple d'un matériau à base de silicone.

5. Amortisseur de vibrations de torsion selon l'une des revendications précédentes, **caractérisé en ce que** le volant annulaire (3) est supporté sur des paliers lisses (9) de façon définie dans le sens radial et/ou axial par rapport à la partie formant moyeu (2).
